# FASCICULE DE BREVET EUROPEEN

(11) **EP 4 599 669 B1**
(45) Date de publication et mention de la délivrance du brevet: **15.07.2026**
(21) Numéro de dépôt: 25155902.7
(22) Date de dépôt: 04.02.2025
(51) Int. Cl.: A01K 1/00

(54) **SÉPARATEUR POUR UN BÂTIMENT D ÉLEVAGE, EN PARTICULIER DE BOVINS**
SEPARATOR FÜR EIN VIEHZUCHTGEBÄUDE, INSBESONDERE FÜR RINDER
SEPARATOR FOR A BREEDING STRUCTURE, IN PARTICULAR FOR CATTLE

(30) Priorité: 07.02.2024 FR 2401216
(43) Date de publication de la demande: 13.08.2025
(73) Titulaire: Group Elastoteck, 44850 Mouzeil (FR)
(72) Inventeur: BIORET, Jean-Vincent, 44390 PETIT MARS (FR)
(74) Mandataire: Jacobacci & Partners France

(56) Documents cités:
- EP-A1- 0 979 604
- EP-A1- 2 883 446
- EP-A1- 4 260 688
- EP-A1- 4 265 105
- DE-U1- 29 621 546
- GB-A- 1 087 787
- KR-U- 19980 038 108

## Description

### Domaine technique de l'invention

La présente invention concerne le domaine technique de l'élevage.

Elle concerne en particulier les séparateurs pour un bâtiment d'élevage, en particulier de bovins.

### Etat de la technique

Dans un bâtiment d'élevage, en particulier de bovins, il est utile d'installer des séparateurs pour délimiter la place disponible pour chaque animal et pour diminuer la pression des animaux dominants à l'auge.

De tels séparateurs sont généralement installés sur les barrières à cornadis. Ils peuvent également être intéressants le long des espaces de repos, notamment des logettes.

Toutefois, en pratique, la structure de ces séparateurs n'est pas toujours optimale, avec des risques de blessures pour les animaux ou une contention trop faible pour un bon positionnement et donc une bonne hygiène.

Pour limiter ce risque, il existe des séparateurs qui comprennent :
- une partie avant, rigide, comprenant au moins un organe tubulaire métallique, et
- une partie arrière, flexible.

EP 4 260 688 A1 divulgue un tel séparateur.

Mais les séparateurs flexibles actuels ne sont pas encore entièrement satisfaisants sur le plan de l'installation.

En effet, les structures de réception comportent souvent une ossature métallique destinée à recevoir des interfaces de solidarisation portées par les séparateurs.

Or, le positionnement de ces interfaces de solidarisation n'est parfois pas adapté à certaines structures de réception.

### Présentation de l'invention

Afin de remédier à l'inconvénient précité de l'état de la technique, la présente invention propose un séparateur pour un bâtiment d'élevage, en particulier de bovins, destiné à être solidarisé avec une structure de réception, à savoir une barrière à cornadis.

Ce séparateur comprend :
- une partie avant, rigide, comprenant au moins un organe tubulaire métallique, et
- une partie arrière, flexible,
lequel au moins un organe tubulaire métallique comporte au moins deux interfaces de solidarisation qui sont chacune destinées à une solidarisation entre ledit au moins un organe tubulaire métallique et ladite structure de réception,

Et ladite partie avant est structurée pour autoriser un jeu en translation entre lesdites interfaces de solidarisation, de sorte à autoriser un ajustement en écartement entre lesdites interfaces de solidarisation.

Cette invention autorise un positionnement à façon des interfaces de solidarisation, avantageusement en écartement, qui est adaptable à une gamme de structures de réception.

Selon un mode de réalisation préféré, ladite partie avant comporte au moins deux organes tubulaires métalliques qui comportent chacun l'une au moins desdites interfaces de solidarisation.

Et lesdits au moins deux organes tubulaires métalliques coopèrent par l'intermédiaire d'au moins un assemblage coulissant, autorisant un jeu en translation entre lesdits organes tubulaires métalliques.

D'autres caractéristiques non limitatives et avantageuses de ce mode de réalisation, conforme à l'invention, prises individuellement ou selon toutes les combinaisons techniquement possibles, sont les suivantes :
- ladite partie avant est structurée pour autoriser un jeu en translation entre les interfaces de solidarisation, de sorte à autoriser un ajustement en écartement entre ces interfaces de solidarisation correspondant à un réglage en distance entre ces interfaces de solidarisation selon une cote définie dans un plan général, ladite cote étant destinée à s'étendre parallèlement au plan longitudinal de la structure de réception ;
- lesdits au moins deux organes tubulaires métalliques coopèrent par l'intermédiaire d'au moins un assemblage coulissant choisi parmi un couple de tronçons d'assemblage, coopérant par emmanchement, en combinaison avantageusement avec des moyens de verrouillage en translation, ou une interface de liaison, ajustable sur la longueur de l'un au moins desdits organes tubulaires métalliques ;
- ladite partie avant comprend :
   -- un premier organe tubulaire métallique comprenant au moins trois tronçons structurels :
      --- un tronçon montant, destiné à venir en regard et à distance de la structure de réception,
      --- un tronçon retour inférieur, dont une extrémité avant porte une interface de solidarisation inférieure, et
      --- un tronçon retour supérieur, comportant avantageusement un bras transversal et un bras montant,
         et
   -- un second organe tubulaire métallique, formant traverse, comportant :
      --- une extrémité avant équipée d'une interface de solidarisation, supérieure,
      --- une extrémité arrière, comportant une interface de liaison avec ledit tronçon montant, ladite interface de liaison étant ajustable sur la longueur dudit tronçon montant, et
      --- un tronçon d'assemblage, latéral, coopérant par emmanchement avec le tronçon retour supérieur dudit premier organe tubulaire métallique, formant un couple de tronçons d'assemblage.

D'autres caractéristiques non limitatives et avantageuses de l'invention, prises individuellement ou selon toutes les combinaisons techniquement possibles, sont les suivantes :
- la partie arrière, flexible, comprend au moins un organe longitudinal flexible, lequel organe longitudinal flexible consiste avantageusement en un organe tubulaire plastique, dont une extrémité arrière libre comporte avantageusement un élément de protection, avantageusement une pièce sphérique ;
- ledit au moins un organe tubulaire métallique comporte au moins un conduit de réception, femelle, qui comporte une extrémité arrière munie d'une ouverture s'ouvrant à l'opposé des interfaces de solidarisation, et
   lequel au moins un organe longitudinal flexible comporte :
   -- un tronçon avant, mâle, qui est introduit dans ledit moins un conduit de réception, au travers de ladite ouverture, avantageusement de manière amovible, et
   -- un tronçon arrière, libre, formant ladite partie arrière,
   de préférence, la section intérieure dudit au moins un conduit de réception dudit organe tubulaire métallique correspond, au jeu près, à la section extérieure dudit tronçon avant dudit au moins un organe longitudinal flexible, et
   de préférence, le tronçon arrière de l'organe longitudinal flexible s'étend en porte-à-faux, depuis l'organe tubulaire métallique,
   de préférence, ledit au moins un conduit de réception s'étend sur au moins une partie de la longueur de l'un au moins desdits trois tronçons structurels, de préférence l'un au moins desdits deux tronçons retour,
   de préférence encore, l'ouverture dudit au moins un conduit de réception est ménagée à la jonction entre ledit conduit de réception et ledit tronçon montant,
   encore de préférence, ledit au moins un conduit de réception s'étend sur au moins une partie de la longueur dudit tronçon retour inférieur, et ledit au moins un conduit de réception dudit organe tubulaire métallique et ledit au moins un organe longitudinal flexible définissent un angle allant de 1° à 50° par rapport à un plan horizontal, avec une pente croissante dans le sens avant vers arrière ;
- la partie avant présente une cote horizontale allant de 20 à 50 cm, et en ce que la partie arrière présente une cote horizontale allant de 50 à 150 cm ;
- ledit au moins un organe longitudinal flexible est rectiligne ;
- ledit au moins un conduit de réception dudit organe tubulaire métallique et ledit au moins un tronçon avant dudit au moins un organe longitudinal flexible sont rectilignes.

La présente invention concerne encore un système de séparation pour un bâtiment d'élevage, en particulier de bovins, destiné à être solidarisé avec une structure de réception, à savoir une barrière à cornadis,
lequel système de séparation comprend :
- plusieurs séparateurs selon l'invention, et éventuellement
- une barre longitudinale rapportée, destinée à être solidarisée avec lesdits séparateurs juxtaposés, et/ou
- des moyens de pulvérisation, pour le rafraichissement des animaux, avantageusement portés par ladite barre longitudinale rapportée.

L'invention concerne également un bâtiment d'élevage équipé d'un système de séparation selon l'invention, rapporté sur une structure de réception, à savoir une barrière à cornadis.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### Description détaillée de l'invention

De plus, diverses autres caractéristiques de l'invention ressortent de la description annexée effectuée en référence aux dessins qui illustrent des formes, non limitatives, de réalisation de l'invention et où :
[Fig. 1] est une vue schématique, de côté, d'un séparateur selon l'invention ;
[Fig. 2] est une vue partielle et agrandie du séparateur selon la figure 1, illustrant en particulier l'assemblage entre les deux organes tubulaires métalliques ;
[Fig. 3] est une vue partielle et agrandie du séparateur selon la figure 1, illustrant en particulier l'interface de solidarisation inférieure.

Il est à noter que, sur ces figures, les éléments structurels et/ou fonctionnels communs aux différentes variantes peuvent présenter les mêmes références.

La présente invention concerne ainsi un séparateur 1 pour un bâtiment d'élevage B, en particulier de bovins.

Le séparateur 1 est destiné à être solidarisé avec une structure de réception C (représentée très schématiquement sur les figures), par exemple une barrière à cornadis ou au sein de logettes (non représentés).

Un tel séparateur 1 est en particulier utile pour délimiter la place disponible pour chaque animal (par exemple des bovins, et en particulier des vaches laitières).

Au niveau d'une barrière à cornadis C, le séparateur 1, dit encore « séparateur de cornadis », est en particulier utile pour délimiter la place disponible pour chaque animal (par exemple des bovins, et en particulier des vaches laitières) au sein d'une marche d'alimentation M.

Dans ce cas, le séparateur 1 est destiné à être solidarisé avec la barrière à cornadis C, avantageusement classique en soi.

De manière générale, une telle barrière à cornadis C comprend deux barres longitudinales C1, C2 (l'une inférieure C2 et l'autre supérieure C1), horizontales, reliées par des montants C3, C4, verticaux.

Des couples de montants C3, C4 délimitent, avec les deux barres longitudinales C1, C2, une ouverture adaptée au passage de la tête d'un animal.

Pour assurer la contention, un premier montant C3 de chaque couple de montants C3, C4 est équipé d'une barre de contention oscillante C5.

La barre de contention oscillante C5, en regard du second montant C4, est avantageusement mobile entre deux positions de fin de course :
- une position « libre », avantageusement inclinée, pour autoriser le passage de la tête de l'animal dans les deux sens, et
- une position « contention », avantageusement verticale et parallèle au second montant C4, empêchant le passage de la tête de l'animal dans les deux sens.

De manière générale, le séparateur 1 comprend deux parties :
- une partie avant 5, rigide, avantageusement destinée à s'étendre au niveau de la tête et des épaules de l'animal, et
- une partie arrière 6, flexible, avantageusement destinée à s'étendre au niveau des flans de l'animal.

La partie avant 5 et la partie arrière 6 s'étendent avantageusement dans un même plan général P, de préférence vertical et perpendiculaire à un plan longitudinal C' de la structure de réception C.

La partie avant 5 et la partie arrière 6 présentent avantageusement des cotes particulières (mesurées dans le plan général P), à savoir de préférence :
- la partie avant 5 présente une cote horizontale allant de 20 à 50 cm (perpendiculairement au plan longitudinal C' de la structure de réception C, correspondant avantageusement à l'entraxe entre un tronçon montant 521 de la partie avant 5 et des moyens de solidarisation 7 avec la structure de réception C, décrits ci-après), et
- la partie arrière 6 présente une cote horizontale allant de 50 à 150 cm (perpendiculairement au plan longitudinal C' de la structure de réception C, correspondant avantageusement à l'entraxe entre le tronçon montant 521 de la partie avant 5 et une extrémité arrière 6a de la partie arrière 6, libre, décrits ci-après).

De manière générale, la partie avant 5 s'étend avantageusement en porte-à-faux depuis la structure de réception C ; et la partie arrière 6 s'étend avantageusement en porte-à-faux depuis la partie avant 5.

### Partie avant

La partie avant 5, rigide, comprenant au moins un organe tubulaire métallique 51.

Ledit au moins un organe tubulaire métallique 51 présente avantageusement les cotes suivantes, pouvant être prises en combinaison ou indépendamment les unes des autres :
- un diamètre allant de 40 à 70 mm, et
- une épaisseur allant de 2 à 5 mm.

Ledit au moins un organe tubulaire métallique 51 comporte des moyens de solidarisation 7 avec la structure de réception C, à savoir au moins deux interfaces de solidarisation 71, 72.

Lesdites au moins deux interfaces de solidarisation 71, 72 sont chacune destinées à assurer une solidarisation entre ledit au moins un organe tubulaire métallique 51 et ladite structure de réception C.

Lesdites au moins deux interfaces de solidarisation 71, 72 sont avantageusement superposées dans le plan général P.

Et, selon l'invention, cette partie avant 5 est structurée pour autoriser un jeu en translation entre les interfaces de solidarisation 71, 72, de sorte à autoriser un ajustement en écartement entre ces interfaces de solidarisation 71, 72.

En d'autres termes, cette partie avant 5 est structurée pour autoriser un jeu en translation entre les interfaces de solidarisation 71, 72, de sorte à autoriser un ajustement en écartement entre ces interfaces de solidarisation 71, 72 correspondant avantageusement à un réglage en distance entre ces interfaces de solidarisation 71, 72 selon une cote J définie dans le plan général P, ladite cote étant destinée à s'étendre parallèlement au plan longitudinal C' de la structure de réception C (avantageusement vertical).

La partie avant 5 est avantageusement structurée pour définir un axe de translation passant par les interfaces de solidarisation 71, 72.

La cote J s'étend avantageusement verticalement ou au moins approximativement verticalement.

Encore en d'autres termes, l'ajustement en écartement entre les interfaces de solidarisation 71, 72 correspond avantageusement à un réglage en distance entre ces interfaces de solidarisation 71, 72 selon une cote J définie dans le plan général P, ladite cote étant destinée à s'étendre parallèlement au plan longitudinal C' de la structure de réception C.

La cote J correspond encore avantageusement à une distance définie par les entraxes 71', 72' passant par les deux interfaces de solidarisation 71, 72

Selon un mode de réalisation préféré, la partie avant 5 comporte au moins deux organes tubulaires métalliques 52, 53 qui comportent chacun l'une au moins des interfaces de solidarisation 71, 72.

Et lesdits au moins deux organes tubulaires métalliques 52, 53 coopèrent par l'intermédiaire d'au moins un assemblage coulissant 8, autorisant un jeu en translation entre lesdits organes tubulaires métalliques 52, 53.

De préférence encore, ledit au moins un assemblage coulissant 8 est choisi parmi :
- un couple de tronçons d'assemblage 81, dans lequel les organes tubulaires métalliques 52, 53 coopèrent par emmanchement, en combinaison avantageusement avec des moyens de verrouillage en translation (non représentés - par exemple une vis de verrouillage en translation), ou
- une interface de liaison 82, ajustable sur la longueur de l'un au moins desdits organes tubulaires métalliques 52, 53, en combinaison avantageusement avec des moyens de verrouillage en translation (non représentés - par exemple une vis de verrouillage en translation).

En particulier, d'une part, le couple de tronçons d'assemblage 81 forme avantageusement une structure télescopique.

Tel que développé par la suite, les organes tubulaires métalliques 52, 53 comportent des tronçons emmanchés l'un dans l'autre, tout en autorisant un mouvement relatif en translation.

D'autre part, l'interface de liaison 82 comprend avantageusement un collier de serrage qui est, d'une part, ajustable en coulissement sur la longueur d'un organe tubulaire métallique 52 et, d'autre part, porté par une extrémité de l'autre organe tubulaire métallique 53.

Selon un mode de réalisation préféré, ladite partie avant 5 comprend deux organes tubulaires métalliques 52, 53, assemblés avec un jeu en translation, à savoir :
- un premier organe tubulaire métallique 52, en forme générale de C, s'ouvrant vers la structure de réception C, et
- un second organe tubulaire métallique 53, formant traverse, s'étendant entre la structure de réception C et le premier organe tubulaire métallique 52.

Le premier organe tubulaire métallique 52 comprend au moins trois tronçons structurels, à savoir :
- un tronçon montant 521, comportant avantageusement au moins une portion rectiligne sur tout ou partie de sa longueur, destiné à venir en regard et à distance de la structure de réception C,
- un tronçon retour inférieur 522, dont une extrémité avant 522a porte une interface de solidarisation inférieure 71, et
- un tronçon retour supérieur 523, comportant avantageusement un bras transversal 5231 et un bras montant 5232.

Le bras montant 5232 comporte une extrémité avant 5232a.

De préférence, le tronçon montant 521 et le bras montant 5232 s'étendent parallèlement l'un par rapport à l'autre.

Le second organe tubulaire métallique 53, formant traverse, avantageusement rectiligne, comporte deux extrémités :
- une extrémité avant 531, équipée d'une interface de solidarisation supérieure 72,
- une extrémité arrière 532, comportant une interface de liaison 82, intercalée entre le second organe tubulaire métallique 53 et le tronçon montant 521 du premier organe tubulaire métallique 52, ladite interface de liaison 82 étant ajustable sur la longueur de ce tronçon montant 521.

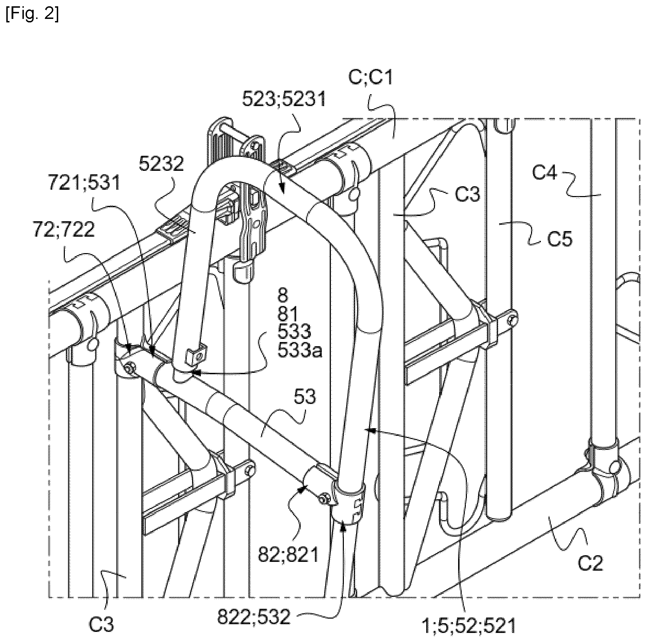

L'interface de liaison 82 comporte avantageusement une combinaison de deux colliers 821, 822 (figure 2) :
- un premier collier 821, dit encore « manchon », emmanché sur l'extrémité arrière 532 du second organe tubulaire métallique 53, et
- un second collier 822, ceinturant le tronçon montant 521 du premier organe tubulaire métallique 52, avantageusement sur une portion rectiligne.

Ce second organe tubulaire métallique 53 comporte encore un tronçon d'assemblage 533, latéral, coopérant par emmanchement avec le tronçon retour supérieur 523 du premier organe tubulaire métallique 52 (en particulier dans son bras montant 5232), formant un couple de tronçon d'assemblage 81.

En d'autres termes, le tronçon d'assemblage 533 est introduit ici au travers de l'extrémité avant 5232a du bras montant 5232.

De préférence, le tronçon d'assemblage 533 et le bras montant 5232 sont rectilignes et coaxiaux, pour favoriser le coulissement.

Par exemple, la longueur du tronçon d'assemblage 533 et du bras montant 5232 est de 10 à 35 cm.

Encore de manière générale, la section intérieure du bras montant 5232 correspond, au jeu près, à la section extérieure du tronçon d'assemblage.

De manière avantageuse, le tronçon d'assemblage 533, latéral, est ménagé entre l'extrémité avant 531 et l'extrémité arrière 532 du second organe tubulaire métallique 53.

De préférence, le tronçon d'assemblage 533 s'étend parallèlement au tronçon montant 521 du premier organe tubulaire métallique 52.

De préférence, le tronçon d'assemblage 533, formant une partie mâle, est introduit et coulisse dans le bras montant 5232 du tronçon retour supérieur 523 (formant une partie femelle).

Ainsi, le second organe tubulaire métallique 53 est ici mobile en coulissement, parallèlement à lui-même, sur au moins une portion rectiligne de la longueur du tronçon montant 521 et selon une direction parallèle à ce tronçon montant 521.

Par ailleurs, de manière générale, les moyens de solidarisation 7 sont avantageusement choisis parmi les moyens de liaison mécaniques adaptés à une solidarisation avec la structure de réception C, par exemple des colliers venant autour des barres longitudinales et/ou des montants verticaux.

De tels moyens de solidarisation 7 sont par exemple décrit dans le document FR3124924.

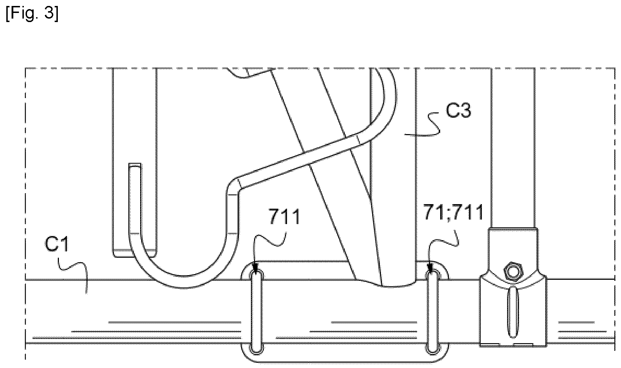

Par exemple, pour une structure de réception C en forme de barrière de cornadis, les moyens de solidarisation 7 comprennent :
- une interface de solidarisation supérieure 72 (figure 2), adaptée à être solidarisée avec un montant C3, C4 de la barrière à cornadis C, et
- une interface de solidarisation inférieure 71 (figure 3), adaptée à être solidarisée avec une barre longitudinale C1, C2 de ladite barrière à cornadis C.

De préférence, l'interface de solidarisation supérieure 72 consiste en un collier de fixation.

Plus précisément, cette interface de solidarisation supérieure 72 comporte avantageusement une combinaison de deux colliers 721, 722 (figure 2) :
- un premier collier 721, dit encore « manchon », emmanché sur l'extrémité avant 531 du second organe tubulaire métallique 53, et
- un second collier 722, ceinturant le montant C3, C4 de la barrière à cornadis C, avantageusement sur une portion rectiligne.

De préférence, l'interface de solidarisation inférieure 71 comprend deux zones de solidarisation 711, adaptés à être solidarisés avec la barre longitudinale C1, C2 de la barrière à cornadis C, de part et d'autre d'un montant C3, C4 (figure 3).

De préférence encore, l'interface de solidarisation inférieure 71 comprend deux brides 711 adaptées à être positionnées autour de la barre longitudinale C1, C2 de la barrière à cornadis C, de part et d'autre du montant C3, C4.

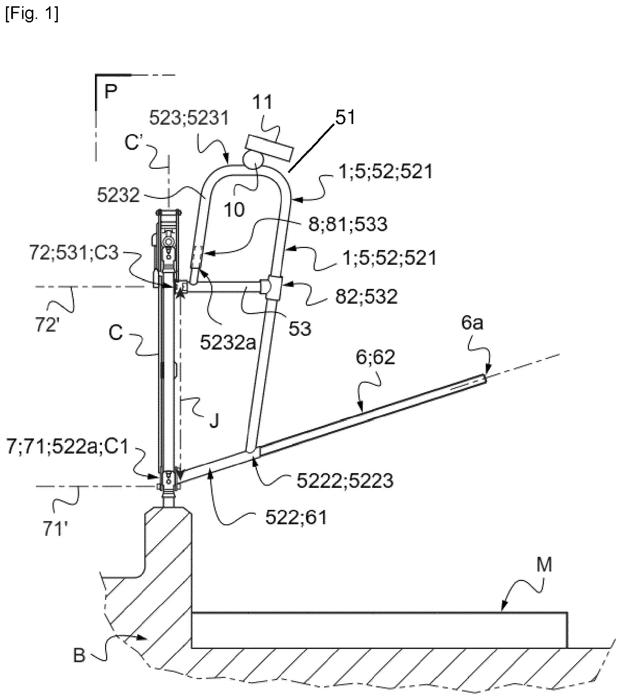

De manière générale, encore selon un mode de réalisation préférentiel illustré sur la figure 1, ledit au moins un organe tubulaire métallique 51 comporte au moins un conduit de réception 522, femelle, qui comporte une extrémité arrière 5222 munie d'une ouverture 5223 s'ouvrant à l'opposé des interfaces de solidarisation 71, 72.

Tel que développé par la suite, ledit au moins un conduit de réception 522 est destiné à recevoir un tronçon de la partie arrière 6 par emmanchement.

En l'espèce, ledit au moins un conduit de réception 522 s'étend sur au moins une partie de la longueur de l'un au moins des tronçons structurels 521, 522, 523 du premier organe tubulaire métallique 52, de préférence l'un au moins des deux tronçons retour 522, 523.

De préférence encore, ledit au moins un conduit de réception 522 est formé par le tronçon retour inférieur 522 (désigné par le même repère dans un souci de compréhension).

L'ouverture 5223 dudit au moins un conduit de réception 522 est avantageusement ménagée à la jonction entre le conduit de réception 522 (autrement dit le tronçon retour inférieur 522) et ledit tronçon montant 521.

Ledit au moins un conduit de réception 522 dudit organe tubulaire métallique 51 définit un angle allant de 1° à 50° par rapport à un plan horizontal, avec une pente croissante dans le sens avant vers arrière.

### Partie arrière

Selon un mode de réalisation, la partie arrière 6, flexible, comprend (voire consiste en) au moins un organe longitudinal flexible 6 (désigné par le même repère dans un souci de simplicité).

Par « organe longitudinal », on entend avantageusement une pièce ayant la forme générale d'une barre.

Par « organe longitudinal flexible 6 », on entend en particulier un organe longitudinal qui est apte, d'une part, à être déformé par l'animal venant s'appuyer sur la partie arrière 6 et, d'autre part, à reprendre totalement sa forme après l'arrêt de l'appui exercé par l'animal.

Chaque organe longitudinal flexible 6 est avantageusement rectiligne, au repos.

Un organe longitudinal flexible 6 est par exemple réalisé dans un matériau plastique, choisi par exemple parmi PEHD, PP, avantageusement tubulaire.

Une extrémité arrière 6a, libre, de cet organe longitudinal flexible 6 comporte avantageusement un élément de protection, avantageusement une pièce sphérique (avantageusement encore une pièce en forme de calotte sphérique).

L'organe longitudinal flexible 6 présente avantageusement les cotes suivantes, pouvant être prises en combinaison ou indépendamment les unes des autres :
- une longueur allant de 200 à 2 000 mm,
- un diamètre allant de 20 à 70 mm,
- une épaisseur allant de 5 à 20 mm.

De manière générale, ledit au moins un organe longitudinal flexible 6 comporte :
- un tronçon avant 61 (non visible), mâle, qui est introduit dans ledit moins un conduit de réception 522, au travers de ladite ouverture 5223, avantageusement de manière amovible, et
- un tronçon arrière 62, libre, formant ladite partie arrière 6.

De préférence, le tronçon avant 61, mâle, est introduit dans ledit moins un conduit de réception 522, au travers de ladite ouverture 5223, sans moyen de verrouillage en translation.

Le tronçon arrière 62 s'étend en porte-à-faux, depuis l'organe tubulaire métallique 51.

De préférence, ledit au moins un tronçon avant 61 dudit au moins un organe longitudinal flexible 6, et ledit au moins un conduit de réception 522 dudit organe tubulaire métallique 51, sont rectilignes.

Encore de manière générale, la section intérieure dudit au moins un conduit de réception 522 dudit organe tubulaire métallique 51 correspond, au jeu près, à la section extérieure dudit au moins un tronçon avant 61 dudit au moins un organe longitudinal flexible 6.

Et, de préférence, le tronçon arrière 62 de l'organe longitudinal flexible 6 s'étend en porte-à-faux, depuis ledit au moins un organe tubulaire métallique 51.

De préférence encore, ledit au moins un organe longitudinal flexible 6 définit un angle allant de 1° à 50° par rapport à un plan horizontal, avec une pente croissante dans le sens avant vers arrière.

### Système de séparation

En pratique, l'invention est mise en œuvre sous la forme d'un système de séparation qui comprend :
- plusieurs séparateurs 1 selon l'invention, avantageusement en bataille,
   et éventuellement
- une barre longitudinale rapportée 10, destinée à être solidarisée avec les séparateurs 1 juxtaposés, et/ou
- des moyens de pulvérisation 11, pour le rafraichissement des animaux, avantageusement portés par la barre longitudinale rapportée 10.

La structure des séparateurs 1 a l'intérêt d'offrir une solution adaptable à une gamme de structure de réception C.

En particulier, les interfaces de solidarisation 71, 72 sont ici ajustables en écartement, ce qui permet de remédier aux problèmes d'encombrements au niveau de la structure de réception C.

En l'espèce, le séparateur 1 peut être positionné au niveau de la structure de réception C.

Si besoin, le second organe tubulaire métallique 53 peut être manœuvré en coulissement le long du tronçon montant 521 du premier organe tubulaire métallique 52, de sorte à ajuster l'écartement des interfaces de solidarisation 71, 72 en fonction de la conformation de la structure de réception C.

Lors de ce cheminement, le couple de tronçon d'assemblage 81 s'ajuste également en longueur : le tronçon d'assemblage 533 du second organe tubulaire métallique 53 coulisse au sein du bras montant 5232 du tronçon retour supérieur 523.

Par exemple, le second organe tubulaire métallique 53 est mobile de sorte que la cote J est avantageusement de 10 à 25 cm.

En d'autres termes, le second organe tubulaire métallique 53 est mobile en translation sur une course de 5 à 25 cm.

Plus généralement, le second organe tubulaire métallique 53 est avantageusement mobile, par rapport au bras montant 5232 du tronçon retour supérieur 523, sur une course allant de :
- une position maximale haute, à distance du tronçon retour inférieur 522, dans laquelle le second organe tubulaire métallique 53 est en appui sur le bras montant 5232 du tronçon retour supérieur 523 (en particulier au niveau de son extrémité avant 5232a), et
- une position maximale basse, rapprochée du tronçon retour inférieur 522, dans laquelle le second organe tubulaire métallique 53 est écarté du bras montant 5232 du tronçon retour supérieur 523 (en particulier de son extrémité avant 5232a).

Lorsque les moyens de solidarisation 7 sont convenablement positionnés, ces derniers sont solidarisés avec la structure de réception C.

Parallèlement, ledit au moins un assemblage coulissant 8 est verrouillé, en avantageusement via les moyens de verrouillage en translation (non représentés - par exemple une vis de verrouillage en translation), pour participer à la stabilité du séparateur 1.

Par ailleurs, la barre longitudinale rapportée 10 est solidarisée ici avec la partie avant 5, de préférence au niveau de l'extrémité supérieure du tronçon montant 521 ou au niveau du tronçon retour supérieur 523.

Encore de manière générale, les moyens de pulvérisation 11 consistent par exemple en des buses connectées à un circuit d'alimentation hydrique.

Le bâtiment d'élevage B est ainsi équipé d'un système de séparation selon l'invention, rapporté sur une structure de réception C, par exemple une barrière à cornadis.

Si nécessaire, pour circuler avec un engin entre deux rangées de séparateurs 1, il est possible de démonter temporairement la partie arrière 6 de ces derniers.

L'engin peut alors circuler dans l'espace « élargi » qui est délimité par les parties avant 5 de ces deux rangées de séparateurs 1.

En fin d'intervention, les parties arrière 6 de ces deux rangées de séparateurs 1 peuvent être remises en place.

Bien entendu, diverses autres modifications peuvent être apportées à l'invention dans le cadre des revendications annexées.

## Revendications

1. Séparateur (1) pour un bâtiment d'élevage, en particulier de bovins, destiné à être solidarisé avec une structure de réception (C), à savoir une barrière à cornadis,
lequel séparateur (1) comprend :
- une partie avant (5), rigide, comprenant au moins un organe tubulaire métallique (51), et
- une partie arrière (6), flexible,
lequel au moins un organe tubulaire métallique (51) comporte au moins deux interfaces de solidarisation (71, 72) qui sont chacune destinées à une solidarisation entre ledit au moins un organe tubulaire métallique (51) et ladite structure de réception (C),
**caractérisé en ce que** ladite partie avant (5) est structurée pour autoriser un jeu en translation entre lesdites interfaces de solidarisation (71, 72), de sorte à autoriser un ajustement en écartement entre lesdites interfaces de solidarisation (71, 72).

2. Séparateur (1) pour un bâtiment d'élevage, selon la revendication 1, **caractérisé en ce que** la partie avant (5) et la partie arrière (6) s'étendent dans un même plan général (P) destiné à être vertical et perpendiculaire au plan longitudinal (C') de la structure de réception (C).
lesquelles au moins deux interfaces de solidarisation (71, 72) sont superposées dans le plan général (P), et
laquelle partie avant (5) est structurée pour autoriser un jeu en translation entre les interfaces de solidarisation (71, 72), de sorte à autoriser un ajustement en écartement entre ces interfaces de solidarisation (71, 72) correspondant à un réglage en distance entre ces interfaces de solidarisation (71, 72) selon une cote (J) définie dans ledit plan général (P), ladite cote étant destinée à s'étendre parallèlement au plan longitudinal (C') de la structure de réception (C).

3. Séparateur (1) pour un bâtiment d'élevage, selon l'une quelconque des revendications 1 ou 2, **caractérisé en ce que** ladite partie avant (5) comporte au moins deux organes tubulaires métalliques (52, 53) qui comportent chacun l'une au moins desdites interfaces de solidarisation (71, 72),
et **en ce que** lesdits au moins deux organes tubulaires métalliques (52, 53) coopèrent par l'intermédiaire d'au moins un assemblage coulissant (8), autorisant un jeu en translation entre lesdits organes tubulaires métalliques (52, 53).

4. Séparateur (1) pour un bâtiment d'élevage, selon la revendication 3, **caractérisé en ce que** lesdits au moins deux organes tubulaires métalliques (52, 53) coopèrent par l'intermédiaire d'au moins un assemblage coulissant (8) choisi parmi :
- un couple de tronçons d'assemblage (81), coopérant par emmanchement, en combinaison avantageusement avec des moyens de verrouillage en translation, ou
- une interface de liaison (82), ajustable sur la longueur de l'un au moins desdits organes tubulaires métalliques (52, 53).

5. Séparateur (1) pour un bâtiment d'élevage, selon l'une quelconque des revendications 3 ou 4, **caractérisé en ce que** ladite partie avant (5) comprend :
- un premier organe tubulaire métallique (52) comprenant au moins trois tronçons structurels :
-- un tronçon montant (521), destiné à venir en regard et à distance de la structure de réception (C),
-- un tronçon retour inférieur (522), dont une extrémité avant (522a) porte une interface de solidarisation inférieure (71), et
-- un tronçon retour supérieur (523), comportant avantageusement un bras transversal (5231) et un bras montant (5232),
et
- un second organe tubulaire métallique (53), formant traverse, comportant :
-- une extrémité avant (531) équipée d'une interface de solidarisation (72), supérieure,
-- une extrémité arrière (532), comportant une interface de liaison (82) avec ledit tronçon montant (521), ladite interface de liaison (82) étant ajustable sur la longueur dudit tronçon montant (521), et
-- un tronçon d'assemblage (533), latéral, coopérant par emmanchement avec le tronçon retour supérieur (523) dudit premier organe tubulaire métallique (52), formant un couple de tronçons d'assemblage (81).

6. Séparateur (1) pour un bâtiment d'élevage, selon l'une quelconque des revendications 1 à 5, **caractérisé en ce que** la partie arrière (6), flexible, comprend au moins un organe longitudinal flexible (6),
lequel organe longitudinal flexible (6) consiste avantageusement en un organe tubulaire plastique, dont une extrémité arrière (6a) libre comporte avantageusement un élément de protection, avantageusement une pièce sphérique.

7. Séparateur (1) pour un bâtiment d'élevage, selon la revendication 6, **caractérisé en ce que** ledit au moins un organe longitudinal flexible (6) est rectiligne.

8. Séparateur (1) pour un bâtiment d'élevage, selon la revendication 1 à 7, **caractérisé en ce que** ledit au moins un organe tubulaire métallique (51) comporte au moins un conduit de réception (522), femelle, qui comporte une extrémité arrière (5222) munie d'une ouverture (5223) s'ouvrant à l'opposé des interfaces de solidarisation (71, 72), et
**en ce que** ledit au moins un organe longitudinal flexible (6) comporte :
- un tronçon avant (61), mâle, qui est introduit dans ledit moins un conduit de réception (522), au travers de ladite ouverture (5223), avantageusement de manière amovible, et
- un tronçon arrière (62), libre, formant ladite partie arrière (6),
de préférence, la section intérieure dudit au moins un conduit de réception (522) dudit organe tubulaire métallique (51) correspond, au jeu près, à la section extérieure dudit tronçon avant (61) dudit au moins un organe longitudinal flexible (6), et
de préférence, le tronçon arrière (62) de l'organe longitudinal flexible (6) s'étend en porte-à-faux, depuis l'organe tubulaire métallique (51).

9. Système de séparation pour un bâtiment d'élevage, en particulier de bovins, destiné à être solidarisé avec une structure de réception (C), à savoir une barrière à cornadis,
lequel système de séparation comprend :
- plusieurs séparateurs (1) selon l'une quelconque des revendications 1 à 8,
et éventuellement
- une barre longitudinale (10) rapportée, destinée à être solidarisée avec lesdits séparateurs (1) juxtaposés, et/ou
- des moyens de pulvérisation (11), pour le rafraichissement des animaux, avantageusement portés par ladite barre longitudinale (10) rapportée.

10. Bâtiment d'élevage équipé d'un système de séparation selon la revendication 9, rapporté sur une structure de réception (C), à savoir une barrière à cornadis.

## Patentansprüche

1. Separator (1) für ein Viehzuchtgebäude, insbesondere für Rinder, der dazu bestimmt ist, mit einer Aufnahmestruktur (C), und zwar einer Gatterbarriere, fest verbunden zu werden,
wobei der Separator (1)
- einen steifen vorderen Teil (5) mit mindestens einem metallenen rohrförmigen Organ (51) und
- einen flexiblen rückwärtigen Teil (6)
aufweist,
wobei das mindestens eine metallene rohrförmige Organ (51) mindestens zwei Befestigungsschnittstellen (71, 72) aufweist, die jeweils dafür bestimmt sind, das mindestens eine metallene rohrförmige Organ (51) und die Aufnahmestruktur (C) miteinander fest zu verbinden,
**dadurch gekennzeichnet, daß** der vordere Teil (5) dazu strukturiert ist, ein Verschiebungsspiel zwischen den besagten Befestigungsschnittstellen (71, 72) zu ermöglichen und so ein Justieren des Abstands zwischen den Befestigungsschnittstellen (71, 72) zu ermöglichen.

2. Separator (1) für ein Viehzuchtgebäude gemäß Anspruch 1, **dadurch gekennzeichnet, daß** sich der vordere Teil (5) und der rückwärtige Teil (6) in ein und derselben allgemeinen Ebene (P) erstrecken, die vertikal und senkrecht zur Längsebene (C') der Aufnahmestruktur (C) sein soll,
wobei die mindestens zwei Befestigungsschnittstellen (71, 72) in der allgemeinen Ebene (P) übereinander liegen und
wobei der vordere Teil (5) dazu strukturiert ist, ein Verschiebungsspiel zwischen den Befestigungsschnittstellen (71, 72) zu ermöglichen und so ein Justieren des Abstands zwischen diesen Befestigungsschnittstellen (71, 72) zu ermöglichen, das einem Einstellen des Abstands zwischen diesen Befestigungsschnittstellen (71, 72) gemäß eines in der allgemeinen Ebene (P) definierten Maßes (J) entspricht, wobei das Maß dazu bestimmt ist, sich parallel zur Längsebene (C') der Aufnahmestruktur (C) zu erstrecken.

3. Separator (1) für ein Viehzuchtgebäude gemäß einem der Ansprüche 1 oder 2, **dadurch gekennzeichnet, daß** der vordere Teil (5) mindestens zwei metallene rohrförmige Organe (52, 53) aufweist, von denen jedes mindestens eine der Befestigungsschnittstellen (71, 72) aufweist,
und daß die mindestens zwei metallenen rohrförmigen Organe (52, 53) mittels mindestens eines gleitenden Zusammenbaus (8) zusammenwirken, der ein Verschiebungsspiel zwischen den besagten metallenen rohrförmigen Organen (52, 53) ermöglicht.

4. Separator (1) für ein Viehzuchtgebäude gemäß Anspruch 3, **dadurch gekennzeichnet, daß** die mindestens zwei metallenen rohrförmigen Organe (52, 53) mittels mindestens eines gleitenden Zusammenbaus (8) zusammenwirken, der aus
- einem Paar Zusammenbauabschnitte (81), die durch Ineinanderstecken, vorteilhafterweise zusammen mit Verriegelungsmitteln, zusammenwirken, oder
- einer Verbindungsschnittstelle (82), die über die Länge mindestens eines der metallenen rohrförmigen Organe (52, 53) verstellbar ist,
ausgewählt ist.

5. Separator (1) für ein Viehzuchtgebäude gemäß einem der Ansprüche 3 oder 4, **dadurch gekennzeichnet, daß** der vordere Teil (5)
- ein erstes metallenes rohrförmiges Organ (52) mit mindestens drei strukturellen Abschnitten:
-- einem ansteigenden Abschnitt (521), der gegenüber und in einem Abstand zur Aufnahmestruktur (C) kommen soll,
-- einem unteren rückführenden Abschnitt (522), von dem ein vorderes Ende (522a) eine untere Befestigungsschnittstelle (71) aufweist, und
-- einem oberen rückführenden Abschnitt (523), der vorteilhafterweise einen Querarm (5231) und einen ansteigenden Arm (5232) aufweist, und
- ein eine Traverse bildendes zweites metallenes rohrförmiges Organ (53) mit:
-- einem mit einer oberen Befestigungsschnittstelle (72) versehenen vorderen Ende (531),
-- einem rückwärtigen Ende (532), das eine Verbindungsschnittstelle (82) für den aufsteigenden Abschnitt (521) aufweist, wobei die Verbindungsschnittstelle (82) über die Länge des ansteigenden Abschnitts (521) einstellbar ist, und
-- einem seitlichen Zusammenbauabschnitt (533), der durch Ineinanderstecken mit dem oberen rückführenden Abschnitt (523) des ersten metallenen rohrförmigen Organs (52) zusammenwirkt und ein Paar Zusammenbauabschnitte (81) bildet, aufweist.

6. Separator (1) für ein Viehzuchtgebäude gemäß einem der Ansprüche 1 bis 5, **dadurch gekennzeichnet, daß** der flexible rückwärtige Teil (6) mindestens ein flexibles Längsorgan (6) aufweist,
wobei das flexible Längsorgan (6) vorteilhafterweise aus einem rohrförmigen Plastikorgan besteht, von dem ein freies rückwärtiges Ende (6a) vorteilhafterweise ein Schutzelement, vorteilhafterweise ein kugelförmiges Stück, aufweist.

7. Separator (1) für ein Viehzuchtgebäude gemäß Anspruch 6, **dadurch gekennzeichnet, daß** das mindestens eine flexible Längsorgan (6) geradlinig ist.

8. Separator (1) für ein Viehzuchtgebäude gemäß Anspruch 1 bis 7, **dadurch gekennzeichnet, daß** das mindestens eine metallene rohrförmige Organ (51) mindestens ein Aufnahmerohr (522) aufweist, das ein rückwärtiges Ende (5222) mit einer Öffnung (5223), die von den Befestigungsschnittstellen (71, 72) abgewandt geöffnet ist, und
daß das mindestens eine flexible Längsorgan (6)
- einen vorderen Abschnitt (61) zum Einstecken, der in das mindestens eine Aufnahmerohr (522) durch die besagte Öffnung (5223) vorteilhafterweise herausnehmbar eingesteckt wird, und
- einen den rückwärtigen Teil (6) bildenden freien rückwärtigen Abschnitt (62) aufweist,
wobei der Innendurchmesser des mindestens einen Aufnahmerohrs (522) des metallenen rohrförmigen Organs (51) bis auf ein Spiel dem Außendurchmesser des vorderen Abschnitts (61) des mindestens einen flexiblen Längsorgan (6) entspricht, und
wobei sich der rückwärtige Abschnitt (62) des flexiblen Längsorgans (6) vom metallenen rohrförmigen Organ (51) aus freitragend erstreckt.

9. Trennsystem für ein Viehzuchtgebäude, insbesondere für Rinder, das dazu bestimmt ist, mit einer Aufnahmestruktur (C), und zwar einer Gatterbarriere, fest verbunden zu werden,
wobei das Trennsystem
- mehrere Separatoren gemäß einem der Ansprüche 1 bis 8 und eventuell
- eine angebaute Längsstange (10), die dazu bestimmt ist, mit den nebeneinander angeordneten Separatoren (1) fest verbunden zu werden, und/oder
- vorteilhafterweise von der angebauten Längsstange (10) getragene Sprühmittel (11) zum Erfrischen der Tiere
aufweist.

10. Viehzuchtgebäude, das mit einem Trennsystem gemäß Anspruch 9 versehen ist, das an eine Aufnahmestruktur (C), und zwar eine Gatterbarriere, angebaut ist.

## Claims

1. Separator (1) for a livestock building, in particular for cattle, intended to be secured with a receiving structure (C), namely a feed barrier,
wherein the separator (1) comprises:
- a rigid front part (5), comprising at least one metal tubular member (51), and
- a flexible rear part (6),
wherein the at least one metal tubular member (51) includes at least two securing interfaces (71, 72) which are each intended for securing between said at least one metal tubular member (51) and said receiving structure (C),
**characterised in that** said front part (5) is structured to allow a translational play between said securing interfaces (71, 72), so as to allow an adjustment in spacing between said securing interfaces (71, 72).

2. Separator (1) for a livestock building, according to claim 1, **characterised in that** the front part (5) and the rear part (6) extend in the same general plane (P) intended to be vertical and perpendicular to the longitudinal plane (C') of the receiving structure (C).
wherein the at least two securing interfaces (71, 72) are superposed in the general plane (P), and
wherein the front part (5) is structured to allow a translational play between the securing interfaces (71, 72), so as to allow an adjustment in spacing between these securing interfaces (71, 72) corresponding to a distance setting between these securing interfaces (71, 72) according to a dimension (J) defined in said general plane (P), said dimension being intended to extend parallel to the longitudinal plane (C') of the receiving structure (C).

3. Separator (1) for a livestock building, according to any one of claims 1 or 2, **characterised in that** said front part (5) includes at least two metal tubular members (52, 53) which each include at least one of said securing interfaces (71, 72),
and **in that** said at least two metal tubular members (52, 53) cooperate via at least one sliding assembly (8), allowing a translational play between said metal tubular members (52, 53).

4. Separator (1) for a livestock building, according to claim 3, **characterised in that** said at least two metal tubular members (52, 53) cooperate via at least one sliding assembly (8) chosen from:
- a pair of assembly sections (81), cooperating by fitting, advantageously in combination with means for locking in translation, or
- a linking interface (82), adjustable over the length of the at least one of said metal tubular members (52, 53).

5. Separator (1) for a livestock building, according to any one of claims 3 or 4, **characterised in that** said front part (5) comprises:
- a first metal tubular member (52) comprising at least three structural sections:
-- an upward section (521), intended to be facing and at a distance from the receiving structure (C),
-- a lower return section (522), of which a front end (522a) bears a lower securing interface (71), and
-- an upper return section (523), advantageously including a transverse arm (5231) and an upward arm (5232), and
- a second metal tubular member (53), forming a crosspiece, including:
-- a front end (531) equipped with an upper securing interface (72),
-- a rear end (532), including a linking interface (82) with said upward section (521), said linking interface (82) being adjustable over the length of said upward section (521), and
-- a lateral assembly section (533), cooperating by fitting with the upper return section (523) of said first metal tubular member (52), forming a pair of assembly sections (81).

6. Separator (1) for a livestock building, according to any one of claims 1 to 5, **characterised in that** the flexible rear part (6) comprises at least one flexible longitudinal member (6),
wherein the flexible longitudinal member (6) advantageously consists of a plastic tubular member, of which a free rear end (6a) advantageously includes a protective element, advantageously a spherical part.

7. Separator (1) for a livestock building, according to claim 6, **characterised in that** said at least one flexible longitudinal member (6) is rectilinear.

8. Separator (1) for a livestock building, according to claim 1 to 7, **characterised in that** said at least one metal tubular member (51) includes at least one female receiving duct (522), which includes a rear end (5222) provided with an opening (5223) which opens opposite the securing interfaces (71, 72), and
**in that** said at least one flexible longitudinal member (6) includes:
- a male front section (61), which is inserted into said at least one receiving duct (522), through said opening (5223), advantageously removably, and
- a free rear section (62), forming said rear part (6),
preferably, the inner cross-section of said at least one receiving duct (522) of said metal tubular member (51) corresponds, more or less the play, to the outer cross-section of said front section (61) of said at least one flexible longitudinal member (6), and preferably, the rear section (62) of the flexible longitudinal member (6) extends in an overhang, from the metal tubular member (51).

9. Separation system for a livestock building, in particular for cattle, intended to be secured with a receiving structure (C), namely a feed barrier,
wherein the separation system comprises:
- several separators (1) according to any one of claims 1 to 8, and optionally
- a mounted longitudinal bar (10), intended to be secured with said juxtaposed separators (1), and/or
- spraying means (11), for cooling the animals, advantageously borne by said mounted longitudinal bar (10).

10. Livestock building equipped with a separation system according to claim 9, mounted on a receiving structure (C), namely a feed barrier.
